(19) Europäisches Patentamt
European Patent Office
Office européen des brevets

(11) EP 0 915 071 B1

(12) **EUROPÄISCHE PATENTSCHRIFT**

(45) Veröffentlichungstag und Bekanntmachung des Hinweises auf die Patenterteilung:
**07.01.2004 Patentblatt 2004/02**

(51) Int Cl.7: **C04B 41/48**, C08F 20/12, C09D 133/06

(21) Anmeldenummer: **98120594.1**

(22) Anmeldetag: **30.10.1998**

# (54) Verwendung von wässrigen Zubereitungen, die als filmbildenden Bestandteil ein Copolymer P enthalten

Use of aqueous preparations containing a copolymer P as a film forming component

Utilisation des préparations aqueuses contenant un copolymère P comme composantes formant un film

(84) Benannte Vertragsstaaten:
**AT DE FR GB SE**

(30) Priorität: **10.11.1997 DE 19749642**

(43) Veröffentlichungstag der Anmeldung:
**12.05.1999 Patentblatt 1999/19**

(73) Patentinhaber: **BASF AKTIENGESELLSCHAFT**
**67056 Ludwigshafen (DE)**

(72) Erfinder:
- **Zhao, Cheng-Li**
  **68723 Schwetzingen (DE)**
- **Schwartz, Manfred**
  **67227 Frankenthal (DE)**
- **Bechert, Bertold**
  **67269 Grünstadt (DE)**
- **Wiese, Harm**
  **69115 Heidelberg (DE)**
- **Hümmer, Wolfgang**
  **67134 Birkenheide (DE)**

(74) Vertreter: **Kinzebach, Werner, Dr. et al**
**Reitstötter, Kinzebach & Partner,**
**Postfach 21 11 60**
**67011 Ludwigshafen (DE)**

(56) Entgegenhaltungen:
**EP-A- 0 355 028** **DE-A- 19 514 266**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von wässrigen Zubereitungen gemäß den Ansprüchen 1 bis 7.

Die vorliegende Erfindung betrifft ebenfalls ein verfahren zur Herstellung beschichteter Betonsteine und Faserzementplatten gemäß den Ansprüchen 8 und 9.

Unter mineralischen Formkörpern sind hier und im Folgenden insbesondere Formkörper zu verstehen, die ein mineralisches Bindemittel aufweisen. Konkret wird hierunter ein Formkörper verstanden, der aus einem Gemisch (einem Mörtel) aus einem mineralischen Bindemittel, Wasser, Zuschlägen sowie gegebenenfalls Hilfsmitteln nach Formgebung dadurch entsteht, dass das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton und/oder Zement, die durch anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigt.

Die Zuschläge bestehen in der Regel aus körnigem oder faserförmigem natürlichem oder künstlichem Gestein (Kies, Sand, Mineralfasern), in Sonderfällen auch aus Metallen oder organischen Zuschlägen oder aus Gemischen der genannten Zuschläge, mit Korngrößen oder Faserlängen die dem jeweiligen Verwendungszweck in an sich bekannter Weise angepasst sind. Häufig werden zum Zweck der Farbgebung auch Buntpigmente als Zuschläge mitverwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z.B. aus der US-A 43 40 510, der GB-PS 15 05 558, der US-A 31 96 122, der US-A 30 43 790, der US-A 32 39 479, der DE-A 43 17 035, der DE-A 43 17 036, der JP-A 91/131 533 und anderen Schriften bekannt sind.

Beispiele für erfindungsgemäß zu beschichtende mineralische Formkörper sind z.B. Betonröhren, wie sie zum Transport von Abwasser angewendet werden (vgl. z.B. JP-A 55/44 273), Betondachsteine (vgl. z.B. DE-A 21 64 256 oder DE-A 39 01 073) oder Randsteine, Treppenstufen, Bodenplatten, Sockelplatten auf der Basis mineralischer Bindemittel sowie Faserzementplatten, d. h. flächige mineralische Formkörper, die mit anorganischen oder organischen Fasern, z.B. Polyester- oder Nylonfasern, gefüllt sind.

Nachteilig an mineralischen Formkörpern ist, dass unter dem Einfluss der Witterung (insbesondere der Einwirkung von Wasser) die kationischen Bestandteile wie $Ca^{2+}$ im Laufe der Zeit herausgelöst werden, was ihre Festigkeit mindert. Eine weitere nachteilige Eigenschaft mineralischer Formkörper ist das Auftreten von Ausblüherscheinungen. Diese sind vermutlich darauf zurückzuführen, dass die mineralischen Bindemittel mehrwertige Kationen wie $Ca^{2+}$ in alkalischer Umgebung enthalten. Durch Reaktion mit dem Kohlendioxid aus der Luft können sich so an der Oberfläche der mineralischen Formkörper in Wasser schwerlösliche unansehnliche weiße Kalkflekken ausbilden. Das Erscheinungsbild des Ausblühens kann sowohl bereits während des Erhärtens von frisch zubereiteten mineralischen Formkörpern als auch unter der Einwirkung der Witterung auf bereits erhärtete mineralische Formkörper auftreten.

Zur Vermeidung der vorgenannten nachteiligen Eigenschaften werden die mineralischen Formkörper häufig mit einer Beschichtung versehen. Hierzu werden heute in der Regel wässrige Beschichtungssysteme eingesetzt, die als filmbildenden Bestandteil eine wässrige Polymerisatdispersion enthalten. Übliche Bindemittel umfassen Styrol/Acrylester-Copolymerisate, Homo- und Copolymerisate des Vinylacetats, Reinacrylate und ähnliche (vgl. z. B. DE 21 64 256). Die damit erhältlichen Beschichtungen vermochten jedoch den Durchtritt der kationischen Bestandteile (Ausblühen) nicht in befriedigender Weise zu verhindern. Zudem schmutzen derartige Beschichtungen leicht an.

Aus der DE-A-38 27 975 und der DE-A-40 03 909 sind Beschichtungen für Betonsteine auf der Basis wässriger Polymerisatdispersionen, die wenigstens ein aromatisches Keton als Fotosensibilisator enthalten, bekannt. Durch den Fotosensibilisator kommt es zu einer oberflächlichen Vernetzung der Beschichtung. zwar lassen sich so die unerwünschten Ausblüherscheinungen weitgehend vermindern, jedoch sind die Beschichtungen bei längerer Bewitterung nicht stabil.

Der Schutz mineralischer Formkörper vor den oben beschriebenen Ausblühungen konnte auch durch Beschichtungsmassen auf der Basis von Styrol/Acrylat-Dispersionen bzw. Reinacrylatdispersionen der EP-A-469 295 und der DE-A-195 14 266 verbessert werden. Hierfür empfiehlt die EP-A-469 295 die Verwendung eines speziellen anionischen Emulgators und die DE-A-195 14 266 die Verwendung von Polymerisaten, welche spezielle Monomere mit Sulfonatgruppen einpolymerisiert enthalten.

Die Beschichtungen des Standes der Technik haben alle den Nachteil, dass ihre Wasseraufnahme vergleichsweise hoch ist. Diese Wasseraufnahme birgt die Gefahr, dass niedermolekulare Bestandteile der Beschichtung, beispielsweise oberflächenaktive Substanzen, die bei der Herstellung der wässrigen Zubereitungen häufig eingesetzt werden, bei längerer Bewitterung ausgespült werden. Dieses Ausspülen äußert sich beispielsweise in einem verstärkten Weißanlaufverhalten oder einer Versprödung der Beschichtung. Zudem hat die Wasseraufnahme aufgrund der mit

ihr einhergehenden Quellung des Polymeren eine Verringerung der mechanischen Stabilität der Beschichtung und eine Erhöhung der Oberflächenrutschigkeit zur Folge, was aus Sicherheitsgründen ebenfalls unerwünscht ist. Zudem besteht bei pigmenthaltigen Beschichtungen die Gefahr, dass sich der Farbeindruck aufgrund der Wasseraufnahme der Beschichtung nachteilig verändert.

Der vorliegenden Erfindung liegt somit die Aufgabe zugrunde, Beschichtungen für mineralische Formkörper bereitzustellen, die sich durch eine geringe Wasseraufnahme auszeichnen und zugleich auch bei längerer Einwirkung von Feuchtigkeit ihre Festigkeit und ihr optisches Erscheinungsbild nicht nachteilig verändern.

Es wurde überraschenderweise gefunden, dass die Wasseraufnahme von Beschichtungen auf der Basis von Copolymeren ethylenisch ungesättigter Monomere dadurch verringert werden kann, dass man mehr als 0,2 Gew.-% bis zu 5 Gew.-% Itaconsäure, bezogen auf die gesamte, zu polymerisierende Monomermenge, mitpolymerisiert. Grundsätzlich sind Itaconsäure enthaltende Copolymere aus der EP-A-264 903 bekannt.

Man verwendet dort die Itaconsäure zur Verbesserung der mechanischen Stabilität gummielastischer Polymere auf der Base von Alkylacrylat. Hinweise auf die Witterungsstabilität und Wasseraufnahme derartiger Polymerisate bei Bewitterung gibt die EP-A-264 903 nicht.

Die vorliegende Erfindung betrifft somit die Verwendung von wässrigen Zubereitungen, die wenigstens ein Copolymer P, aufgebaut aus ethylenisch ungesättigten Monomeren M, als filmbildenden Bestandteil enthalten, zur Beschichtung mineralischer Formkörper, wobei das Copolymer P eine Glasübergangstemperatur $T_G$ im Bereich von -25 bis +80 °C aufweist und die Monomere M mehr als 0,2 Gew.-% und bis zu 5,0 Gew.-%, bezogen auf ihr Gesamtgewicht, Itaconsäure als Monomer M1 umfassen.

Vorzugsweise umfassen die Monomere M, aus denen das Copolymer P aufgebaut ist, 0,3 bis 4 Gew.-% und insbesondere 0,5 bis 3 Gew.-% Itaconsäure. Anstelle von Itaconsäure kann auch dessen Anhydrid bei der Herstellung eingesetzt werden. Vorzugsweise wird jedoch Itaconsäure als Monomer M1 eingesetzt.

Üblicherweise erfolgt die Herstellung der Itaconsäure enthaltenden Polymerisate durch radikalische Polymerisation ethylenisch ungesättigter Monomere M, die neben Itaconsäure wenigstens ein weiteres Comonomer umfassen. Geeignete Comonomere sind in der Regel ausgewählt unter vinylaromatischen Monomeren, wie Styrol, α-Methylstyrol, o-Chlorstyrol oder Vinyltoluole, den Vinylestern von aliphatischen $C_1$-$C_{18}$-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinylpivalat, Vinyllaurat, Vinylstearat sowie im Handel befindliche Monomere VEOVA® 5-11 (VEOVA® X ist ein Handelsname der Fa. Shell und steht für Vinylester von α-verzweigten, aliphatischen Carbonsäuren mit X C-Atomen, die auch als Versatic® X-Säuren bezeichnet werden) sowie den Estern ethylenisch ungesättigter $C_3$-$C_8$-Mono- oder Dicarbonsäuren mit $C_1$-$C_{18}$-, vorzugsweise $C_1$-$C_{12}$- und insbesondere $C_1$-$C_8$-Alkanolen oder $C_5$-$C_8$-Cycloalkanolen. Geeignete $C_1$-$C_{18}$-Alkanole sind beispielsweise Methanol, Ethanol, n-Propanol, i-Propanol, 1-Butanol, 2-Butanol, Isobutanol, tert.-Butanol, n-Hexanol, 2-Ethylhexanol, Laurylalkohol und Stearylalkohol. Geeignete Cycloalkanole sind beispielsweise Cyclopentanol oder Cyclohexanol. Geeignet sind insbesondere Ester der Acrylsäure, der Methacrylsäure, der Crotonsäure, der Maleinsäure, der Itaconsäure, der Citraconsäure oder der Fumarsäure. Speziell handelt es sich um die Ester der Acrylsäure und/oder der Methacrylsäure, wie (Meth)acrylsäuremethylester, (Meth)acrylsäureethylester, (Meth)acrylsäureisopropylester, (Meth)acrylsäure-n-butylester, (Meth)acrylsäureisobutylester, (Meth)acrylsäure-1-hexylester, (Meth)acrylsäure-tert.-butylester, (Meth)acrylsäure-2-ethylhexylester, sowie ferner um die Ester der Fumarsäure und der Maleinsäure, z. B. Fumarsäuredimethylester, Maleinsäuredimethylester oder Maleinsäuredi-n-butylester. Weiterhin kommen Nitrile α,β-monoethylenisch ungesättigter $C_3$-$C_8$-Carbonsäuren, wie Acrylnitril oder Methacrylnitril in Betracht. Darüber hinaus können auch $C_4$-$C_8$-konjugierte Diene, wie 1,3-Butadien, Isopren oder Chloropren, α-Olefine, wie Ethylen, Propen und Isobuten sowie Vinylchlorid oder Vinylidenchlorid als Comonomere eingesetzt werden.

Vorzugsweise umfassen die Monomere M neben der Itaconsäure wenigstens zwei weitere voneinander verschiedene Monomere M2 und M3 als Comonomere. Diese sind vorzugsweise ausgewählt unter den oben genannten vinylaromatischen Monomeren, den vorgenannten Estern ethylenisch ungesättigter $C_3$-$C_8$-Monocarbonsäuren mit $C_1$-$C_{12}$-Alkanolen sowie den Vinylestern aliphatischer $C_1$-$C_{12}$-Monocarbonsäuren. Die Monomere M2 und M3 machen in der Regel, bezogen auf die Gesamtmonomermenge, wenigstens 65 Gew.-%, vorzugsweise wenigstens 80 Gew.-% und insbesondere wenigstens 90 Gew.-% aus. Die übrigen der vorgenannten Comonomere (im Folgenden als Comonomere M' bezeichnet) werden in der Regel in Mengen < 30 Gew.-%, vorzugsweise < 20 Gew.-% und insbesondere < 10 Gew.-%, bezogen auf die Gesamtmenge der Monomere M, verwendet. Eine bevorzugte Ausführungsform dieser Erfindung betrifft Copolymere P, die keines der vorgenannten Comonomere M' einpolymerisiert enthalten.

Neben den vorgenannten Comonomeren M1, M2, M3 sowie gegebenenfalls M' können die Monomere M außer Itaconsäure auch weitere, hydrophile Monomere M4 umfassen, deren Homopolymerisate eine erhöhte Wasserlöslichkeit oder -quellbarkeit aufweisen. Hierzu zählen monoethylenisch ungesättigte $C_3$-$C_8$-Monocarbonsäuren, wie Acrylsäure, Methacrylsäure, Crotonsäure, Vinylessigsäure, Acrylamidoglykolsäure und Methacrylamidoglykolsäure, deren Amide, wie Acrylamid und Methacrylamid, die monoethylenisch ungesättigten $C_4$-$C_8$-Dicarbonsäuren, wie Maleinsäure, Fumarsäure und Citraconsäure, deren Halbester mit $C_1$-$C_{12}$-Alkanolen, wie Monomethylmaleinat und Mono-n-butylmaleinat, ethylenisch ungesättigte Sulfonsäuren, wie Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, vorzugsweise deren Alkalimetallsalze oder deren Ammoniumsalze und insbesondere deren Natriumsalze. Die Monomere M3 umfassen ferner auch Hydroxyalkylester der vorgenannten ethylenisch ungesättigten Mono- und Dicarbonsäuren, z. B. Hydroxyethylacrylat, Hydroxypropylacrylat, 4-Hydroxybutylacrylat, die entsprechenden Methacrylate und wasserlösliche N-Vinyllactame, z. B. N-Vinylpyrrolidon. Bevorzugte Monomere M4 sind Acrylsäure, Methacrylsäure, Maleinsäure, Fumarsäure, Citraconsäure und insbesondere Acrylamid und Methacrylamid. Die Monomere M4 können, sofern erwünscht, in Mengen von 0,1 bis 4,8 Gew.-%, bezogen auf die Gesamtmonomermenge, eingesetzt werden. In der Regel wird die Gesamtmenge der Monomere M4 + M1 5 Gew.-%, bezogen auf die Gesamtmonomermenge, vorzugsweise 4 Gew.-% und insbesondere 3 Gew.-% nicht überschreiten. Eine bevorzugte Ausführungsform der vorliegenden Erfindung betrifft Copolymere P, die neben Itaconsäure eines der vorgenannten Amide monoethylenisch ungesättigter Carbonsäuren einpolymerisiert enthalten. Eine andere bevorzugte Ausführungsform betrifft Copolymere P, die neben Itaconsäure kein weiteres, hydrophiles Monomer M4 einpolymerisiert enthalten.

Weiterhin können die Monomere M auch Monomere M5 umfassen, die die Festigkeit der Beschichtungen erhöhen. Diese werden in untergeordneter Menge, in der Regel bis zu 10 Gew.-%, vorzugsweise bis 5 Gew.-% und insbesondere bis 1 Gew.-%, bezogen auf die Gesamtmenge der zu polymerisierenden Monomere M, mit einpolymerisiert. Hierbei handelt es sich um Monomere, die wenigstens eine Epoxy-, N-Alkylol- oder eine Carbonylgruppe enthalten. Beispiele hierfür sind die N-Hydroxyalkyl- und N-Alkylolamide der $\alpha,\beta$-monoethylenisch ungesättigten Carbonsäuren mit 3 bis 10 C-Atomen wie 2-Hydroxyethyl(meth)acrylamid und N-Methylol(meth)acrylamid, ethylenisch ungesättigte Glycidylether und -ester, z.B. Vinyl-, Allylund Methallylglycidylether, Glycidylacrylat und -methacrylat, die Diacetonylamide der obengenannten ethylenisch ungesättigten Carbonsäuren, z.B. Diaceton(meth)acrylamid, und die Ester der Acetylessigsäure mit den obengenannten Hydroxyalkylestern ethylenisch ungesättigter Carbonsäuren, z. B. Acetylacetoxyethyl(meth)acrylat. Die Monomere M5 umfassen auch Verbindungen, die zwei nicht-konjugierte, ethylenisch ungesättigte Bindungen aufweisen, z.B. die Diester zweiwertiger Alkohole mit $\alpha,\beta$-monoethylenisch ungesättigten $C_3$-$C_{10}$-Monocarbonsäuren. Beispiele für derartige Verbindungen sind Alkylenglykoldiacrylate- und -dimethacrylate, wie Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat. Eine bevorzugte Ausführungsform dieser Erfindung betrifft Copolymere P, die kein Monomer M5 einpolymerisiert enthalten.

Die Monomere M können selbstverständlich auch Verbindungen umfassen, die die Pigmentbindekraft der Copolymere P bekanntermaßen verbessern. Hier sind beispielsweise Siloxangruppen enthaltende Monomere, wie die Vinyltrialkoxysilane, z. B. Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan zu nennen. Die genannten Monomere können, sofern erwünscht, in Mengen von bis zu 1 Gew.-%, vorzugsweise 0,05 bis 0,5 Gew.-%, bezogen auf die Gesamtmonomermenge, verwendet werden.

Ferner ist es erfindungswesentlich, dass das Copolymer eine Glasübergangstemperatur von -25 bis +80 °C aufweist. Hierbei ist zu beachten, dass eine hochwertige Beschichtung nur dann erhalten wird, wenn die wässrige Zubereitung des filmbildenden Copolymers P eine Mindestfilmbildetemperatur unterhalb der Anwendungstemperatur aufweist. Die Mindestfilmbildetemperatur hängt nun ihrerseits von der Glasübergangstemperatur $T_G$ des Copolymeren P ab (siehe Ullmanns Encyclopedia of Industrial Chemistry, 5 ed, Vol. A 21, 1992, S. 169). Somit führt grundsätzlich eine niedrige Glasübergangstemperatur des Copolymeren P zu einer verbesserten Filmbildung. Andererseits hat eine niedrige Glasübergangstemperatur eine erhöhte Klebrigkeit der Beschichtung und damit eine erhöhte Anschmutzbarkeit der Beschichtung zur Folge. Ferner bedingt eine niedrige Glasübergangstemperatur in der Regel eine verschlechterte Blockfestigkeit. Grundsätzlich lässt sich die Mindestfilmbildetemperatur beeinflussen, dass man der wässrigen Zubereitung sogenannte schwerflüchtige, äußere Weichmacher, z. B. Ester der Phthalsäure und/oder leichtflüchtige, niedrig siedende organische Lösungsmittel als Filmbildehilfsmittel zusetzt.

Es hat sich als vorteilhaft erwiesen, die erfindungsgemäß zur Anwendung kommenden Zubereitungen auf ihre konkreten Anwendungsziele durch Wahl einer geeigneten Glasübergangstemperatur für das Copolymer P abzustimmen. So hat sich für die Beschichtung von Betonsteinen eine Glasübergangstemperatur $T_G$ für die Copolymere P oberhalb -10 °C und insbesondere oberhalb +10 °C als vorteilhaft erwiesen. Vorzugsweise wird bei dieser Ausführungsform der Erfindung die Glasübergangstemperatur $T_G$ +50 °C nicht überschritten. Bei Faserzementplatten, die zum einen bei erhöhter Temperatur beschichtet werden können und die zum anderen eine hohe Blockfestigkeit aufweisen sollen, hat sich hingegen eine Glasübergangstemperatur oberhalb +20 °C und insbesondere oberhalb +40 °C als vorteilhaft erwiesen. Unter der Glasübergangstemperatur $T_G$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765). Ferner kann die Glasübergangstemperatur auch aus der Messung des E-Moduls im Kriechversuch als Funktion der Temperatur bestimmt werden.

In diesem Zusammenhang erweist es sich als hilfreich, die Glasübergangstemperatur $T_G$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von schwach vernetzten Mischpolymerisaten bei großen Molmassen in guter Näherung

$$\frac{1}{T_g} = \frac{X^1}{T_g^{\ 1}} + \frac{X^2}{T_g^{\ 2}} + \cdots \frac{X^n}{T_g^{\ n}}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Aus dem Gesagten wird deutlich, dass die Glastemperatur $T_G$ des Copolymeren P sowohl durch ein geeignetes Hauptmonomer M, das eine Glastemperatur im gewünschten Bereich aufweist, als auch durch Kombination wenigstens eines Monomers M2 mit hoher Glasübergangstemperatur und wenigstens eines Monomers M3 mit niedriger Glasübergangstemperatur eingestellt werden kann.

In einer bevorzugten Ausführungsform der vorliegenden Erfindung umfassen die das Polymer der Komponente A konstituierenden Monomere M wenigstens ein Monomer M2, dessen Homopolymerisat für den Grenzfall eines sehr hohen Molekulargewichts eine Glasübergangstemperatur $T_g > 30$ °C auf weist, und wenigstens ein Monomer M3, dessen Homopolymerisat eine Glasübergangstemperatur $T_G < 20$ °C aufweist. Geeignete Monomere M2 sind beispielsweise Styrol, α-Methylstyrol, Methylmethacrylat, Ethylmethacrylat, n- und iso-Propylmethacrylat, n-, iso- und tert. -Butylmethacrylat sowie tert.-Butylacrylat. Geeignete Monomere M3 sind z. B. die $C_1$-$C_{10}$-Alkylacrylate, Butadien, Vinylversatate, insbesondere Ethylacrylat, n-Butylacrylat und 2-Ethylhexylacrylat. Besonders bevorzugt werden Monomerkombinationen M2/M3, die Styrol und/oder Methylmethacrylat, gegebenenfalls zusammen mit tert.-Butylacrylat, n-Butylmethacrylat und/oder tert.-Butylmethacrylat als Monomere M2 sowie n-Butylacrylat und/oder 2-Ethylhexylacrylat als Monomere M3 umfassen. Üblicherweise liegt das Gewichtsverhältnis der Monomere M2 zu M3 im Bereich von 30:70 bis 70:30 und insbesondere im Bereich von 35:65 bis 65:35. Typische Monomerkombinationen M2/M3 sind:

- Styrol : n-Butylacrylat im Gewichtsverhältnis 35:65 bis 80:20,
- Styrol : 2-Ethylhexylacrylat im Gewichtsverhältnis 35:65 bis 80:20,
- Methylmethacrylat : n-Butylacrylat im Gewichtsverhältnis 40:60 bis 80:20,
- Methylmethacrylat : 2-Ethylhexylacrylat im Gewichtsverhältnis 35:65 bis 80:20,
- ferner ternäre und quartäre Monomermischungen M2/M3, bei denen ein Teil des Styrols durch Methylmethacrylat und/oder n-Butylmethacrylat ersetzt ist, oder ein Teil des n-Butylacrylats durch 2-Ethylhexylacrylat, z. B.:
    - Methylmethacrylat : Styrol : 2-Ethylhexylacrylat im Gewichtsverhältnis 20:20:60,
    - n-Butylmethacrylat : Styrol : 2-Ethylhexylacrylat im Gewichtsverhältnis 35:10:55,
    - Methylmethacrylat : n-Butylmethacrylat : n-Butylacrylat im Gewichtsverhältnis 30:35:35
    - Styrol : n-Butylacrylat : 2-Ethylhexylacrylat im Gewichtsverhältnis 50:25:25 und
    - Styrol : Methylmethacrylat : n-Butylacrylat : 2-Ethylhexylacrylat im Gewichtsverhältnis 20:20:30:30.

Die Herstellung der in den erfindungsgemäß zur Anwendung kommenden wässrigen Zubereitungen enthaltenen Copolymere P kann grundsätzlich auf alle denkbaren Arten der radikalischen Copolymerisation ethylenisch ungesättigter Monomere erfolgen, z. B. durch Lösungs-, Fällungs-, Substanz-, Emulsions- oder Suspensionspolymerisation. Bevorzugt wird die radikalische, wässrige Emulsionspolymerisation der vorgenannten Monomere in Gegenwart wenigstens eines radikalischen Polymerisationsinitiators und gegebenenfalls einer oder mehrerer grenzflächenaktiver Substanzen, da hier bereits die Copolymere P in Form einer wässrigen Suspension vorliegen. Selbstverständlich sind jedoch auch die anderen Polymerisationsmethoden gangbar. Gegebenenfalls kann es dann erforderlich sein, die Copolymere P nachträglich in eine wässrige Dispersion (Sekundärdispersion) zu überführen. Auch können die Copolymere P in Form einer Lösung in einem Wasser/Lösungsmittel-Gemisch eingesetzt werden.

Bevorzugt enthalten die erfindungsgemäßen Zubereitungen das Copolymer P in Form einer wässrigen Dispersion. Hierin können die Copolymerteilchen mittlere Teilchengrößen im Bereich von 50 bis 1 000 nm aufweisen. Verfahren zur Einstellung der Polymerteilchengröße sind beispielsweise aus der EP-A-126 699, der EP-A-567 881, der EP-A-567 819, der DE-A-31 47 008 und der DE-A-42 13 967 bekannt.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z. B. Alkalimetallperoxodisulfate als auch um Azoverbindungen handeln. Bevorzugt werden Redoxinitiatorsysteme verwendet, die

aus wenigstens einem organischen Reduktionsmittel und wenigstens einem Peroxid und/oder Hydroperoxid zusammengesetzt sind, z. B. tert.-Butylhydroperoxid mit Schwefelverbindung, z. B. dem Natriumsalz der Hydroxymethansulfinsäure, Natriumsulfit, Natriumdisulfit, Natriumthiosulfat oder Acetonbisulfit oder Wasserstoffperoxid mit Ascorbinsäure. Auch können für diesen Zweck Redoxinitiatorsysteme verwendet werden, die eine geringe Menge einer im Polymerisationsmedium löslichen Metallverbindung enthalten, deren metallische Komponente in mehreren Wertigkeitsstufen auftreten kann, z. B. Ascorbinsäure/Eisen(II)sulfat/Wasserstoffperoxid, wobei anstelle von Ascorbinsäure auch häufig das Natriumsalz der Hydroxymethansulfinsäure, Acetonbisulfit, Natriumsulfit, Natriumhydrogensulfit oder Natriumbisulfit und anstelle von Wasserstoffperoxid organische Peroxide, wie tert.-Butylhydroperoxid, Alkaliperoxodisulfate und/oder Ammoniumperoxodisulfat verwendet werden kann. Ebenfalls bevorzugte Initiatoren sind Peroxodisulfate, wie Natriumperoxodisulfat oder Ammoniumperoxodisulfat. Vorzugsweise beträgt die Menge der eingesetzten radikalischen Initiatorsysteme, bezogen auf die Gesamtmenge der zu polymerisierenden Monomeren, 0,05 bis 2 Gew.-%, vorzugsweise 0,1 bis 1 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nichtionischer Natur sein. Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Zu den anionischen grenzflächenaktiven Substanzen zählen auch Verbindungen der allgemeinen Formel I,

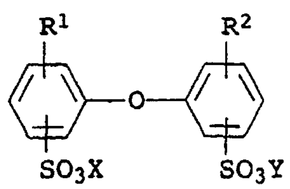 (I)

worin $R^1$ und $R^2$ Wasserstoff oder $C_4$-$C_{24}$-Alkyl bedeuten und nicht gleichzeitig Wasserstoff sind, und X und Y Alkalimetallionen und/oder Ammoniumionen sein können. In der Formel I bedeuten $R^1$ und $R^2$ bevorzugt lineare oder verzweigte Alkylreste mit 6 bis 18 C-Atomen oder Wasserstoff, und insbesondere mit 6, 12 und 16 C-Atomen, wobei $R^1$ und $R^2$ nicht beide gleichzeitig Wasserstoff sind. X und Y sind bevorzugt Natrium, Kalium oder Ammonium, wobei Natrium besonders bevorzugt ist. Besonders vorteilhaft sind Verbindungen I, in denen X und Y Natrium, $R^1$ ein verzweigter Alkylrest mit 12 C-Atomen und $R^2$ Wasserstoff oder gleich $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z. B. aus der US-A-4,269,749, und im Handel erhältlich.

Neben den genannten anionischen Emulgatoren können auch nichtionische Emulgatoren verwendet werden. Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxilierungsgrad von 8 bis 50. Bevorzugt werden anionische Emulgatoren, insbesondere Emulgatoren der allgemeinen Formel I, oder Kombinationen aus wenigstens einem anionischen und einem nichtionischen Emulgator eingesetzt.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden.

Die Monomeren können sowohl als Monomermischung als auch als wässrige Monomeremulsion der Polymerisation zugeführt werden. Vorzugsweise befindet sich ein Teil oder die Gesamtmenge der Itaconsäure in der zuzuführenden Monomeremulsion. Vorzugsweise enthält die Vorlage keine Monomere oder als Monomer nur Itaconsäure.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie 'Encyclopedia of Polymer Science and Technology', Vol. 5, John Wiley & Sons Inc., New York 1966, S. 847).

In einer bevorzugten Ausführungsform der vorliegenden Erfindung wird die Polymerisation in Anwesenheit von 0,01 bis 3 Gew.-% und insbesondere 0,05 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 400 nm, vorzugsweise 20 bis 120 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch Monomere M4, z. B. Acrylsäure und/oder Methacrylsäure und/oder deren Amide, vorzugsweise weniger als 10 Gew.-%, bezogen auf das Gesamtgewicht der Polymerisatteilchen im Saatlatex, einpolymerisiert enthalten kann.

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 110 °C und besonders bevorzugt zwischen 50 und 10 0 °C.

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf diesem Wege sind Polymerisatdispersionen mit Polymergehalten bis zu 80 Gew.-%, bezogen auf das Gesamtgewicht der Dispersion, zugänglich. Für die Herstellung der erfindungsgemäß zur Anwendung kommenden Zubereitungen werden aus praktischen Gründen vorzugsweise Dispersionen mit Polymergehalten im Bereich von 30 bis 70 Gew.-%, insbesondere 40 bis 65 Gew.-%, eingesetzt.

Die erfindungsgemäß zur Anwendung kommenden Zubereitungen können beliebig ausgestaltet werden, d. h. in Form von Lösungen oder Dispersionen der Copolymere P. Als Lösungs- bzw. Dispergiermedium werden bevorzugt wässrige Lösungsmittel, d. h. Wasser oder Mischungen aus Wasser und einem mit Wasser mischbaren organischen Lösungsmittel, z. B. einem $C_1$-$C_4$-Alkanol, wie Methanol, Ethanol, n- oder iso-Propanol, n-, iso-, 2- oder tert.-Butanol, Glykol, Propylenglykol, Butylenglykol, Glycerin, Diethylenglykol, Triethylenglykol, Tetrahydrofuran o. ä. verwendet.

Bevorzugt kommen die erfindungsgemäßen Copolymere P in Form wässriger Zubereitungen, die nicht mehr als 50 Gew.-%, insbesondere nicht mehr als 20 Gew.-% und speziell nicht mehr als 10 Gew.-%, bezogen auf das Gesamtgewicht der Zubereitung, mit Wasser mischbare Lösungsmittel enthalten, zur Anwendung. Ganz besonders bevorzugt enthalten die erfindungsgemäßen Zubereitungen außer Wasser und abgesehen von üblichen Frostschutzmitteln und Filmbildehilfsmitteln keine organischen Lösungsmittel. In diesen Zubereitungen liegen die Copolymere P in der Regel in Form wässriger Dispersionen vor.

Die Lösungen bzw. Dispersionen der Copolymere P können erfindungsgemäß als solche verwendet werden. Die Zubereitungen enthalten jedoch in der Regel 0,1 bis 30 Gew.-% übliche Hilfsmittel. Ferner enthalten die wässrigen Zubereitungen, sofern die Herstellung der Copolymere P durch radikalische, wässrige Emulsionspolymerisation erfolgt ist, auch die für diesen Zweck eingesetzten, grenzflächenaktiven Substanzen, wie Emulgatoren und/oder Schutzkolloide.

Übliche Hilfsmittel sind beispielsweise Netzmittel, Fungizide, Entschäumer, Verdickungsmittel, Gefrierschutzmittel, Verlaufsförderer, Weichmacher und Filmbildehilfsmittel. Geeignete Filmbildehilfsmittel sind beispielsweise Ethylenglykol, Propylenglykol, Butylenglykol, Hexylenglykol, Diethylenglykol, Dipropylenglykol, Dibutylenglykol, deren Halbether mit $C_1$-$C_4$-Alkanolen, z. B. Diethylenglykolmonoethylether, -monobutylether, Propylenglykolmonophenylether, Propylenglykolmonopropylether, -monobutylether, Dipropylenglykolmonopropylether, -monobutylether, deren Ether-Acetate, wie Diethylenglykolmonoethyletheracetat und -monobutyletheracetat, Propylenglykolmonopropyletheracetat und -monobutyletheracetat, Dipropylenglykol-n-butyletheracetat, ferner Alkylester aliphatischer Mono- und Dicarbonsäuren, z. B. Texanol® der Eastman Kodak oder deren technische Gemische davon, z. B. Lusolvan FBH der BASF AG (Di-n-butylestergemische der Bernstein-, Glutar- und Adipinsäure). Als Weichmacher kommen alle üblichen, für Dispersionen geeigneten Weichmacher, beispielsweise (Oligo)propylenglykolalkylphenylether, wie sie z. B. als Plastilit® 3060 der BASF AG im Handel erhältlich sind, in Frage.

Ferner können die erfindungsgemäß zur Anwendung kommenden wässrigen Zubereitungen auch anorganische Füllstoffe und/oder Pigmente enthalten. Typische Pigmente sind beispielsweise Titandioxid, vorzugsweise in der Rutilform, Bariumsulfat, Zinkoxid oder Lithopone (Zinksulfid + Bariumsulfat). Zu dekorativen Zwecken können die Zubereitungen auch farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten. Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc.

Ferner können die erfindungsgemäß zur Anwendung kommenden wässrigen Zubereitungen auch vernetzende Zusätze enthalten. Derartige Zusätze können sein: aromatische Ketone, z. B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren sind z. B. aus der DE-A-38 27 975 und der EP-A-417 568 bekannt. Geeignete vernetzend wirkende Verbindungen sind auch wasserlösliche Verbindungen mit wenigstens zwei Aminogruppen, beispielsweise Dihydrazide aliphatischer Dicarbonsäuren gemäß der DE-A-39 01 073, wenn das Copolymer P Carbonylgruppen enthaltende Monomere einpolymerisiert enthält.

In einer bevorzugten Ausführungsform der vorliegenden Erfindung werden die wässrigen Zubereitungen in Form eines Klarlacks eingesetzt. Sie enthalten dann in der Regel, bezogen auf ihr Gesamtgewicht, 10 bis 60 Gew.-%, vorzugsweise 40 bis 55 Gew.-% wenigstens eines Copolymers P und 0,1 bis 30 Gew.-%, vorzugsweise 0,5 bis 10 Gew.-% übliche Hilfsmittel, insbesondere Entschäumer und/oder Filmbildehilfsmittel.

In einer anderen Ausführungsform der vorliegenden Erfindung werden die wässrigen Zubereitungen in Form pigment- und/oder füllstoffhaltiger Zubereitungen eingesetzt. In diesem Fall liegt der Gesamtgehalt an Copolymer P in der wässrigen Zubereitung im Bereich von 10 bis 60 Gew.-%, vorzugsweise im Bereich von 20 bis 40 Gew.-%, der Gehalt an Hilfsmitteln im Bereich von 0,1 bis 30 Gew.-% und vorzugsweise im Bereich von 0,5 bis 10 Gew.-% und der Gehalt an Füllstoffen und/oder Pigmenten im Bereich von 10 bis 60 Gew.-% und insbesondere 15 bis 40 Gew.-%. Die Menge an Pigmenten und/oder Füllstoffen liegt im Allgemeinen zwischen 50 und 450 Gewichtsteilen, bezogen auf 100 Gewichtsteile Copolymer P in der wässrigen Zubereitung. Ferner werden pigmenthaltige Zubereitungen neben den Filmbildehilfsmitteln und den Entschäumern vorzugsweise auch ein Dispergier- bzw. Netzmittel enthalten.

Die vorliegende Erfindung betrifft auch ein Verfahren zum Beschichten mineralischer Formkörper, das dadurch gekennzeichnet ist, dass man eine der hier beschriebenen wässrigen Zubereitungen auf den mineralischen Formkörper aufbringt. In der Regel wird die aufzutragende Menge der wässrigen Zubereitungen im Bereich von 100 bis 700 $g/m^2$ (nass gerechnet), entsprechend einem getrockneten Auftrag von 50 bis 400 $g/m^2$ und insbesondere einem trockenen Auftrag von 100 bis 250 $g/m^2$ betragen. Der Auftrag kann in an sich bekannter Weise durch Spritzen, Spachteln, Rakeln, Rollen oder Gießen erfolgen. Die sich in der Regel anschließende Trocknung kann sowohl bei Raumtemperatur als auch bei erhöhter Temperatur, beispielsweise im Bereich von 40 bis 100 °C erfolgen.

Das erfindungsgemäße Verfahren ist auf alle Formkörper anwendbar, die ein mineralisches Bindemittel enthalten. Seine bevorzugten Wirkungen entfaltet es bei mineralischen Formkörpern, die Zement als Bindemittel enthalten (Betonsteine und Faserzementplatten). Unter Betonsteinen versteht man geformte Gebilde aus Beton und/oder Gasbeton, z. B. Platten, Rohre und/oder Dachziegel (Betondachsteine). Der Betonstein wird in üblicher Weise aus fertig gemischtem Beton durch ein Strangpressverfahren in bekannter Weise hergestellt. Die erfindungsgemäßen, wässrigen Zubereitungen bieten nunmehr den Vorteil, dass sie nicht nur auf den fertig abgebundenen, sondern auch auf den frisch zubereiteten, nicht abgebundenen "grünen" Betonstein aufgebracht werden können. Das Trocknen der erfindungsgemäß beschichteten, "grünen" Betonsteine kann in üblicher Weise, gegebenenfalls bei Raumtemperatur oder erhöhter Temperatur durchgeführt werden. Vorzugsweise wird der beschichtete "grüne" Betonstein in eine sog. Kammer eingebracht. Dort wird in einem etwa 6 bis 24 Stunden dauernden Abbindeprozess bei Temperaturen im Bereich von 40 bis 70 °C der Beton abgebunden und das Copolymerisat der Beschichtungsmasse verfilmt. Nach diesem Prozess wird der Stein vorzugsweise ein zweites Mal mit der erfindungsgemäßen, wässrigen Zubereitung besprüht. Eine erneute Trocknung erfolgt in einem Tunnelofen bei etwa um 100 °C liegenden Umlufttemperaturen.

Bereits abgebundene mineralische Formkörper können auch bei üblichen Umgebungstemperaturen, z. B. Raumtemperatur, mit den erfindungsgemäßen Zubereitungen beschichtet werden.

Die vorteilhaften Eigenschaften der erfindungsgemäßen, wässrigen Zubereitungen kommen auch bei mineralischen Formkörpern zum Tragen, die mit einem Zementslurry beschichtet sind. Dieser Zementslurry umfasst in der Regel übliche Pigmente, einen Zement als mineralisches Bindemittel, übliche Hilfsmittel und Wasser in geeigneter Menge und wird auf den mineralischen Formkörper, vorzugsweise einen Betonstein, der noch nicht endgültig abgebunden hat, aufgebracht. Die Zementslurryschicht weist im abgebundenen Zustand eine Schichtdicke im Bereich von

200 µm bis 2 000 µm auf. Der Auftrag der erfindungsgemäßen, wässrigen Zubereitungen kann in der oben beschriebenen Weise erfolgen.

Ferner erweisen sich die vorteilhaften Eigenschaften der erfindungsgemäßen, wässrigen Zubereitungen ähnlich vorteilhaft bei sog. Faserzementplatten, d. h. flächigen, mineralischen Formkörpern, die Zement als Bindemittel enthalten und die mineralische oder organische Fasern, z. B. Polyester- und/oder Polyamidfasern als Zuschläge enthalten. Der Auftrag der erfindungsgemäßen, wässrigen Zubereitungen erfolgt in der Regel in der für "grüne" Betonsteine beschriebenen Weise.

Die erfindungsgemäß beschichteten mineralischen Formkörper zeichnen sich zum einen dadurch aus, dass ihre Beschichtung bei feuchter Bewitterung deutlich weniger Wasser aufnimmt als übliche Beschichtungen. Hierdurch steigt zum Beispiel die Rutschfestigkeit der Beschichtungen. Ferner zeichnen sich pigmenthaltige Zubereitungen durch deutlich verringerte Farbänderungen bei feuchter Bewitterung aus. Ferner zeichnen sich die Beschichtungen durch eine erhöhte Festigkeit auch unter Feuchtklimabedingungen aus. Zudem sind die beschichteten Formkörper wirksam vor Ausblühungen geschützt. Diese Eigenschaft ist wie die verbesserte Rutschfestigkeit insbesondere für Betondachsteine von Bedeutung, die daher eine bevorzugte Ausführungsform der Erfindung darstellen. Darüber hinaus sind die Beschichtungen blockfest.

Demnach führt die Verwendung der erfindungsgemäßen, wässrigen Zubereitungen zu einer verbesserten Konservierung der Oberfläche von mineralischen Formkörpern. Die derart beschichteten mineralischen Formkörper sind neu und ebenfalls Gegenstand der vorliegenden Erfindung.

Das erfindungsgemäße Verfahren zur Beschichtung mineralischer Formkörper lässt sich dahingehend noch erweitern, dass man auf die Erstbeschichtung mit den erfindungsgemäßen, wässrigen Zubereitungen eine weitere, strahlungshärtbare Zubereitung aufbringt und anschließend durch energiereiche Strahlung, beispielsweise durch UV-Licht mit einer Wellenlänge mit Bereich von 200 bis 400 nm oder durch Bestrahlung mit energiereichen Elektronen (Elektronenstrahlung; 100 bis 350 keV) aushärtet.

Eine umfassende Darstellung von erfindungsgemäß geeigneten strahlungshärtbaren Zubereitungen findet sich beispielsweise in P.K.T. Oldring (Herausgeber), Chemistry and Technology of UV- and EBformulations for Coatings and Paints, Volume II, SITA Technology, London, 1991. In der Regel enthalten die strahlungshärtbaren Zubereitungen wenigstens ein organisches Oligomer oder Polymer, das wenigstens zwei Acrylat- und/oder Methacrylatgruppen im Molekül aufweist. Der Begriff Oligomer bzw. Polymer umfasst hier und im Folgenden Polymerisate, Polykondensate und Polyadditionsprodukte, chemisch modifizierte Polymere als auch Polymere, die durch Umsetzung von polyfunktionellen Verbindungen, welche wenigstes zwei reaktive Gruppen aufweisen, mit monofunktionellen oder polyfunktionellen Verbindungen, die mit den polyfunktionellen Verbindungen unter Bindungsbildung reagieren können, erhältlich sind.

Geeignete Präpolymere weisen in der Regel ein zahlenmittleres Molekulargewicht $M_N$ > 500 g/Mol auf. Derartige Polymere bzw. Oligomere weisen in der Regel 0,1 bis 1,0 Mol Acrylat- bzw. Methacrylatgruppen je 100 g Polymer/Oligomer auf.

Die erfindungsgemäß zur Anwendung kommenden, strahlungshärtbaren Zubereitungen können darüberhinaus neben den Oligomeren/Polymeren auch sog. Reaktivverdünner enthalten. Hierunter versteht man niedermolekulare Verbindungen mit in der Regel 1 bis 4 ethylenisch ungesättigten Doppelbindungen pro Molekül, vorzugsweise Acrylatoder Methacrylatgruppen, die beim Aushärten mit den Acrylat- und/oder Methacrylatgruppen der Polymere/Oligomere unter Ausbildung eines hochmolekularen Netzwerkes reagieren. Erfindungsgemäß können jedoch auch strahlungshärtbare Zubereitungen eingesetzt werden, die ausschließlich Acrylat- bzw. Methacrylatgruppen enthaltende Polymere/Oligomere und gegebenenfalls ein inertes Lösungs-/Verdünnungsmittel enthalten.

Bevorzugt werden strahlungshärtbare Zubereitungen, worin die Polymere/Oligomere und gegebenenfalls die Reaktivverdünner keine aromatischen Strukturelemente, d. h. keine Phenyl- oder Naphthylgruppen aufweisen.

Die erfindungsgemäß zur Anwendung kommenden strahlungshärtbaren Zubereitungen enthalten in der Regel hierfür typische Oligomere oder Polymere, z. B. Siliconacrylate, Urethanacrylate, acrylatmodifizierte Polyester bzw. Polyesteracrylate, Epoxidacrylate, Polyetheracrylate, Melaminacrylate sowie acrylatmodifizierte Copolymerisate auf der Basis von Hydroxylgruppen enthaltenden Polymerisaten ethylenisch ungesättigter Monomere. Exemplarisch seien genannt die strahlungshärtbaren, wässrigen Polyurethandispersionen der EP-A-704 469 sowie der EP-A-480 251, acrylatmodifizierte Melaminharze der EP-A-464 466, die Urethanacrylate der EP-A-447 845, mit Acrylatgruppen modifizierte Epoxidharze der US 5,057,587 sowie die in der EP-A-12 339 und der EP-A-279 303 genannten strahlungshärtbaren Polymere und Präpolymere. Auf die genannten Schriften wird hiermit in vollem Umfang Bezug genommen.

Typische Reaktivverdünner sind die Ester ethylenisch ungesättigter Carbonsäuren mit monofunktionellen oder polyfunktionellen Alkoholen, beispielsweise die Ester des Diethylenglykols, des Triethylenglykols, des Dipropylenglykols, des Butandiols, des Pentandiols, des Hexandiols, des Neopentylglykols, alkoxilierter phenolischer Verbindungen, z. B. ethoxilierter und propoxilierter Bisphenole, des Cyclohexandimethanols, des Glycerins, des Trimethylolpropans, des Butantriols, des Trimethylolethans, des Pentaerythrits, des Ditrimethylolpropans, des Dipentaerythrits, des Sorbits, Mannits etc. mit insbesondere Acrylsäure und/oder Methacrylsäure. Eine umfassende Darstellung geeigneter Polymere/Oligomere und Reaktivverdünner findet sich in P.K.T. Oldring (loc. cit.) sowie in der P 197 32 621.8, auf die wegen weiterer Details hiermit verwiesen wird.

Je nach Art der Zubereitung enthalten die strahlungshärtbaren Zubereitungen übliche Hilfsmittel, wie Verdikker, Verlaufshilfsmittel, Entschäumer, UV-Stabilisatoren, Emulgatoren und/oder Schutzkolloide und Füllstoffe. Geeignete Hilfsmittel sind dem Fachmann hinreichend aus der Lack-Beschichtungs-Technologie bekannt. Geeignete Füllstoffe, insbesondere für wässrige Dispersionen strahlungshärtbarer Polymere umfassen unter anderem Silikate, die durch Hydrolyse von Siliciumtetrachlorid erhältlich sind (Aerosil® der Fa. Degussa), Kieselerde, Talkum, Aluminiumsilikate, Magnesiumsilikate, Calciumcarbonate etc. Geeignete Stabilisatoren umfassen typische UV-Absorber, wie Oxanilide, Triazine, Benzotriazole (erhältlich als Tinuvin®-Marken der Ciba Geigy) und Benzophenone. Diese können in Kombination mit üblichen Radikalfängern, beispielsweise sterisch gehinderten Aminen, z. B. 2,2,6,6-Tetramethylpiperidin und 2,6-Di-tert.-butylpiperidin sowie Derivate davon, z. B. die in der EP-A-13 443 (HALS-Verbindungen) eingesetzt werden. Stabilisatoren werden üblicherweise in Mengen von 0,1 bis 5,0 und vorzugsweise 0,5 bis 2,5 Gew.-%, bezogen auf die in der Zubereitung enthaltenen, polymerisierbaren Komponenten, eingesetzt.

Sofern die Aushärtung mittels UV-Strahlung erfolgt, enthalten die erfindungsgemäß zur Anwendung kommenden Zubereitungen wenigstens einen Photoinitiator. Bei der Härtung mittels Strahlung energiereicher Elektronen (Elektronenstrahlhärtung) kann auf den Einsatz von Photoinitiatoren verzichtet werden. Geeignete Photoinitiatoren sind z. B. Benzophenon und Benzophenonderivate, wie 4-Phenylbenzophenon und 4-Chlorbenzophenon, Michlers Keton, Anthron, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie Methyl-, Ethyl- und Butylbenzoinether, Benzilketale, wie Benzildimethylketal, 2-Methyl-1-[4-(methylthio)phenyl]-2-morpholinopropan-1-on, Anthrachinon und seine Derivate wie β-Methylanthrachinon und tert.-Butylanthrachinon, Acylphosphinoxide, wie 2,4,6-Trimethylbenzoyldiphenylphosphinoxid, Ethyl-2,4,6-trimethylbenzoylphenylphosphinat und Bisacylphosphinoxide.

Die Photoinitiatoren werden in der Regel in Mengen von 0,05 bis 20 Gew.-%, vorzugsweise 0,1 bis 10 Gew.-% und insbesondere 0,1 bis 5 Gew.-%, bezogen auf das Gesamtgewicht der polymerisierbaren Komponenten der strahlungshärtbaren Zubereitung eingesetzt.

Die strahlungshärtbaren Zubereitungen werden in der Regel wie oben für Zubereitungen der Copolymere P beschriebenen, z. B. durch Spritzen, Spachteln, Rakeln, Bürsten, Rollen oder Gießen auf die mit einer Erstbeschichtung aus den erfindungsgemäßen Zubereitungen versehenen, mineralischen Formkörper aufgebracht. Denkbar ist auch, dass die strahlungshärtbaren Zubereitungen durch "hot melt"-Verfahren oder durch Pulverbeschichtungsverfahren auf die erstbeschichteten mineralischen Formkörper aufgebracht werden. Die Beschichtungsstärke liegt in der Regel im Bereich von 3 bis 200 g/$m^2$, vorzugsweise 10 bis 100 g/$m^2$, bezogen auf die in der Zubereitung enthaltenen, polymerisierbaren Komponenten. Das Aufbringen kann sowohl bei Raumtemperatur als auch bei erhöhter Temperatur, vorzugsweise jedoch nicht oberhalb 100 °C, erfolgen. Anschließend werden die Beschichtungen durch Einwirkung energiereicher Strahlung, vorzugsweise durch UV-Strahlung der Wellenlänge 250 bis 400 nm oder durch Bestrahlung mit energiereichen Elektronen (Elektronenstrahlung; 150 bis 300 keV) gehärtet. Als UV-Quellen dienen beispielsweise Hochdruckquecksilberdampflampen, z. B. die CK- oder CK1-Strahler der Fa. IST. Die üblicherweise zur Vernetzung ausreichende Strahlungsdosis liegt im Bereich von 80 bis 3 000 mJ/$cm^2$. Gegebenenfalls enthaltenes Lösungsmittel, insbesondere Wasser, wird vor der Aushärtung in einem separaten, der Härtung vorgelagerten Trocknungsschritt, beispielsweise durch Erwärmen auf Temperaturen im Bereich von 40 bis 80 °C oder durch Einwirkung von IR-Strahlung, entfernt.

Auch mehrere Schichten aus strahlungshärtbaren Zubereitungen, die sich gegebenenfalls in ihrer Zusammensetzung unterscheiden, können auf die Erstbeschichtung aufgebracht werden.

Durch das Aufbringen einer zusätzlichen, strahlungshärtbaren Beschichtung wird die Wasseraufnahme der Erstbeschichtung noch weiter verringert. Zudem wird die Blockfestigkeit und die Kratzfestigkeit der Beschichtungen weiter erhöht. Dieser Unterschied kommt insbesondere unter Feuchtbedingungen zum Tragen.

Die im Folgenden angegebenen Beispiele sollen die vorliegende Erfindung verdeutlichen.

Beispiele

I. Herstellung der filmbildenden Copolymere P in Form wässriger Dispersionen (Dispersionen D1 bis D3, Vergleichsdispersionen VD1 bis VD8)

Herstellungsvorschrift a) (Dispersionen VD1 bis VD3, D1)

In einem Polymerisationsgefäß legte man 400 g entionisiertes Wasser, 1,4 g Itaconsäure und 6,22 g Emulgatorlösung 1 vor und erwärmte auf 85 °C.

In einem Zulaufgefäß 1 stellte man eine Emulsion aus

| | |
|---|---|
| 200,0 g | entionisiertem Wasser |
| 9,3 g | Emulgatorlösung 1 |
| 37,3 g | Emulgatorlösung 2 |
| 413,0 g | Methylmethacrylat |
| 287,0 g | n-Butylacrylat |
| 28,0 g | 50 gew.-%ige Lösung einer copolymerisierbaren Säure S oder deren Natriumsalz in Wasser |
| 7,0 g | 50 gew.-%ige Lösung von Acrylamid in Wasser |

her.

In einem zweiten Zulaufgefäß 2 stellte man eine Lösung von 1,4 g Natriumperoxodisulfat in 75 g Wasser her.

Anschließend gab man unter Beibehaltung der 85 °C nacheinander in einer Portion 49 g von Zulauf 1 und 7,6 g von Zulauf 2 in die Vorlage und ließ 30 min reagieren.

Anschließend gab man, über räumlich getrennte Zuläufe zeitgleich beginnend, die Restmengen von Zulauf 1 innerhalb 3 h und von Zulauf 2 innerhalb 3,5 h unter Beibehaltung der 85 °C in das Polymerisationsgefäß. Nach Beendigung von Zulauf 2 ließ man 1 h nachpolymerisieren, kühlte auf 25 °C ab und neutralisierte mit Natronlauge (pH ≈ 8).

Der Feststoffgehalt der erhaltenen Dispersionen lag bei etwa 49 Gew.-%. Die jeweils eingesetzte Säure und die Glasübergangstemperatur $T_G$ des erhaltenen Copolymers sind in Tabelle 1 angegeben.

Tabelle 1

| Dispersion | Säure S | Gew.-%1) | $T_G$2) |
|---|---|---|---|
| VD1 | Na-AMPS3) | 1,95 | 37,8 |
| VD2 | Methacrylsäure | 1,95 | 41,5 |
| VD3 | Acrylsäure | 1,95 | 40,9 |
| D1 | Itaconsäure | 1,95 | 32,3 |

1) Säure, bezogen auf die Gesamtmonomermenge
2) Glasübergangstemperatur (bestimmt mittels DSC nach DIN 53765)
3) Natriumsalz der 2-Acrylamido-2-methylpropansulfonsäure

Emulgatorlösung 1: 45 gew.-%ige wässrige Lösung einer als Dowfax® 2A1 (Dow Chemical) im Handel üblichen Wirksubstanz (Gemisch von Mono- und Di-$C_1$-$C_{12}$-alkyl-Verbindung der allgemeinen Formel I als Natriumsalz).

Emulgatorlösung 2: 15 gew.-%ige wässrige Lösung des Natriumsalzes eines $C_{12}$-Alkylsulfats

Herstellungsvorschrift b) (Dispersionen VD4 bis VD8, D2, D3)

In einem Polymerisationsgefäß legte man 517 g entionisiertes Wasser, 1,6 g Emulgatorlösung 1 und 17,5 g Saatdispersion vor und erwärmte auf 85 °C.

Ferner stellte man in einem Zulaufgefäß 1 eine Emulsion aus

| | |
|---|---|
| 567,0 g | entionisiertes Wasser |
| 45,1 g | Emulgatorlösung 1 |
| 35,0 g | Emulgatorlösung 3 |
| 728,0 g | Methylmethacrylat |
| 672,0 g | n-Butylacrylat |
| x g | Säure S (Tabelle 2) |
| y g | einer 50 gew.-%igen, wässrigen Lösung von Acrylamid (Tabelle 2) |

her. In einem zweiten Zulaufgefäß stellte man eine Lösung von 4,2 g Natriumperoxodisulfat in 200 g Wasser her.

Dann gab man unter Beibehaltung der 85 °C in einer Portion 10,2 g von Zulauf 2 in das Polymerisationsgefäß. Anschließend gab man, zeitgleich beginnend und über räumlich getrennte Zuläufe, die Restmenge von Zulauf 1 innerhalb 3 h und die Restmenge von Zulauf 2 innerhalb 3,5 h in das Polymerisationsgefäß. Nach Beendigung von Zulauf 2 ließ man 1 h nachpolymerisieren, kühlte auf 25 °C ab und neutralisierte mit Ammoniak (pH ≈ 8). Die Dispersionen wiesen einen Feststoffgehalt von etwa 51,5 Gew.-% auf.

Als Saat diente eine Polystyrol-Dispersion mit einem Feststoffgehalt von 32 Gew.-% (mittlere Teilchengröße 29 nm; Dodecylbenzolsulfonat als Emulgator).

Emulgatorlösung 1: wie in Herstellungsvorschrift a)

Emulgatorlösung 3: 20 gew.-%ige wässrige Lösung eines Fettalkoholethoxilats ($C_{16}$-$C_{18}$-Alkyl; mittlere Ethoxilierungsgrad 18)

Die jeweils eingesetzte Säure und die Acrylamidmenge ist in Tabelle 2 angegeben.

Tabelle 2:

| Dispersion | Säure S | x g | Gew.-%1) | y g Acrylamid | $T_G$ [°C] |
|---|---|---|---|---|---|
| VD4 | - | 0 | 0 | 28 | 22 |
| VD5 | Acrylsäure | 7 | 0,5 | 14 | 24 |
| VD6 | Acrylsäure | 14 | 1,0 | 14 | 24,5 |
| VD7 | Methacrylsäure | 7 | 0,5 | 14 | 24 |
| VD8 | Methacrylsäure | 14 | 1,0 | 14 | 26,5 |
| D2 | Itaconsäure | 7 | 0,5 | 14 | 24 |
| D3 | Itaconsäure | 14 | 1,0 | 14 | 24 |

1) Säure, bezogen auf die Gesamtmonomermenge

II. Bestimmung der anwendungstechnischen Eigenschaften

1) Zur Bestimmung der Wasseraufnahme wurden je 100 g der Dispersionen VD1 - VD3 und D1 mit 0,5 g eines Entschäumers (Tego Foamex® 825 der Th. Goldschmidt AG) und 5 g eines technischen Gemisches der Di-n-butylester der Bernstein-, Glutar- und Adipinsäure versetzt. Aus den so konfektionierten Dispersionen goss man Filme und trocknete 3 Tage bei Raumtemperatur und 24 h bei 60 °C. Die Filme hatten eine Trockendicke von 500 ± 50 µm. Die so erhaltenen Filme wurden gewogen, 24 h in Wasser gelagert, von anhaftenden Wasserspuren befreit und erneut gewogen. In Tabelle 3 ist der Gewichtsunterschied zwischen trockenem und feuchtem Film in Gew.-%, bezogen auf das Gewicht des trockenen Films, angegeben.

Tabelle 3:

| Dispersion | Wasseraufnahme [Gew.-%] |
|---|---|
| VD1 | 42,9 |
| VD2 | 28,1 |
| VD3 | 9,0 |
| D1 | 5,3 |

2) Die Bestimmung der Wasseraufnahme für Beschichtungen aus den Dispersionen VD4 bis VD8, D2 und D3 wurde wie folgt durchgeführt: Je 100 g der Dispersionen wurden mit 1,0 g Butyldiglykol, 2,0 g Plastilit® 3060 der BASF AG und 0,5 g Entschäumer (Tego Foamex® 825) versetzt. Aus den so konfektionierten Dispersionen goss man in der oben unter 1) beschriebenen Weise Filme mit einer Trockenfilmdicke von 500 ± 50 µm. Die so erhaltenen Filme werden 72 h in Wasser gelagert, von anhaftendem Wasser befreit und 48 h bei 60 °C bis zur Gewichtskonstanz getrocknet. Anschließend wurden die Filme gewogen, erneut 48 h in Wasser gelagert und nach Entfernung anhaftender Wasserspuren erneut gewogen. In Tabelle 4 ist die so ermittelte Gewichtszunahme in Gew.-%, bezogen auf das Gewicht des trockenen Films, angegeben.

3) Zur Bestimmung des Schutzes von mineralischen Formkörpern vor Ausblühungen wurden aus den konfektionierten Dispersionen aus II 2) eine Dispersionsfarbe formuliert. Zu diesem Zweck suspendierte man 235,3 g eines handelsüblichen Füllstoffs (Calciumcarbonat/Calciumsilikat) und 58,8 g Eisenoxid-Rotpigment der BAYER AG in 117,6 g Wasser. Hierzu gab man unter Rühren 588,3 g der konfektionierten Dispersionen aus II 2). Die so erhaltenen Farben ließ man vor ihrer anwendungstechnischen Prüfung 48 h bei Raumtemperatur reifen. Anschließend wurde die Farbe mittels einer Spritzpistole auf einen "grünen" Betonstein*) aufgebracht (Auftrag etwa 20 g/Stein; etwa 320 g/$m^2$ sog. Nassauftrag). Anschließend trocknete man 2 h bei 40 °C und 75 % rel. Luftfeuchte und dann 4 h bei 40 °C und 95 % rel. Luftfeuchte. Danach brachte man in der gleichen Weise eine zweite Beschichtung auf 10 g/Stein) und trocknete 8 h bei 40 °C und 50 % rel. Luftfeuchte (sog. Trokkenauftrag).

*) Als "grüner" Betonstein diente ein Flachstein mit den Abmessungen 30 x 20 x 1,8 cm, der durch Extrusion eines Mörtels aus Sand (Korngröße bis 0,3 mm) und Zement (Gewichtsverhältnis Sand/Zement 4:1) sowie Wasser (Wasser/Zement-Gewichtsverhältnis 1:2,5) hergestellt wurde.

Nach der Trocknung legte man den Stein 7 d mit dem Gesicht auf ein 60 °C warmes Wasserbad. Der Grad der Ausblühungen wurde visuell beurteilt. Hierfür wird folgende Notenskala zugrunde gelegt. Die Ergebnisse sind in Tabelle 4 zusammengefasst.

0 = keine Ausblühungen
1 = fast keine Ausblühungen
2 = leichte Ausblühungen
3 = mäßige Ausblühungen
4 = starke Ausblühungen
5 = sehr starke Ausblühungen

4) Zur Bestimmung der Farbveränderung von beschichteten Betonsteinen, die einer Bewitterung ausgesetzt sind, beschichtete man "grüne" Betonsteine in der für II 3) beschriebenen Weise mit der in II 2) beschriebenen Farbe. Anschließend setzte man den Stein 7 d einem 60 °C warmen Wasserbad aus. Nach dem Abtrocknen wurde der Helligkeitsunterschied zwischen den bewitterten und den unbewitterten Stellen visuell beurteilt. Hierfür legte man eine Skala von 0 bis 2 zugrunde. Die Ergebnisse sind in Tabelle 4 zusammengefasst.

0 = kein Unterschied
1 = schwach erkennbarer Unterschied
2 = deutlich erkennbarer Unterschied

Tabelle 4:

| Dispersion | Wasseraufnahme [Gew.-%] | Ausblühungen | Helligkeitsunterschied |
|---|---|---|---|
| VD4 | 8,1 | 0 | 1 |
| VD5 | 5,9 | 1 | 1 |
| VD6 | 6,2 | 2 | 1 |
| VD7 | 7,1 | 0 | 0-1 |
| VD8 | 6,7 | 1 | 0-1 |
| D2 | 3,9 | 0 | 0 |
| D3 | 4,0 | 0 | 0 |

**Patentansprüche**

**1.** Verwendung von wässrigen Zubereitungen, die wenigstens ein Copolymer P, aufgebaut aus ethylenisch ungesättigten Monomeren M, als filmbildenden Bestandteil enthalten, zur Beschichtung von Betonsteinen und Faserzementplatten, wobei das Copolymer P eine Glasübergangstemperatur $T_G$ im Bereich von -25 bis +80 °C aufweist und die Monomere M ausschließlich umfassen:

- Itaconsäure als Monomer M1 in einer Menge von mehr als 0,2 Gew.-% und bis zu 5,0 Gew.-%, bezogen auf das Gesamtgewicht der Monomere M,

- wenigstens ein weiteres Comonomer, das ausgewählt ist unter vinylaromatischen Monomeren, den Estern ethylenisch ungesättigter $C_3$-$C_8$-Monocarbonsäuren mit $C_1$-$C_{18}$-Alkanolen und den Vinylestern aliphatischer $C_1$-$C_{18}$-Monocarbonsäuren, und

- gegebenenfalls ein oder mehrere hydrophile Monomere M4, ausgewählt unter den Amiden monoethylenisch ungesättigter $C_3$-$C_8$-Monocarbonsäuren, wobei die Gesamtmenge der Monomere M4 und Itaconsäure $\leq 5$ Gew.-%, bezogen auf die Gesamtmonomermenge, ist,

wobei die wässrige Zubereitung zusätzlich wenigstens eine grenzflächenaktive Substanz der Formel I

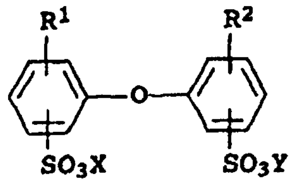

(I)

umfasst, worin
$R^1$ und $R^2$ für Wasserstoff oder $C_4$-$C_{24}$-Alkyl stehen, wobei sie nicht gleichzeitig für Wasserstoff stehen, und
X und Y für Alkalimetallionen und/oder Ammoniumionen stehen.

2. Verwendung gemäß Anspruch 1, wobei die Monomere M mehr als 0,5 Gew.-% und weniger als 3 Gew.-%, bezogen auf ihr Gesamtgewicht, Itaconsäure als Monomer M1 umfassen.

3. Verwendung gemäß einem der vorhergehenden Ansprüche, wobei die Monomere M zusätzlich zur Itaconsäure wenigstens zwei weitere Monomere M2 und M3, ausgewählt unter vinylaromatischen Monomeren, den Estern ethylenisch ungesättigter $C_3$-$C_8$-Monocarbonsäuren mit $C_1$-$C_{12}$-Alkanolen und den Vinylestern aliphatischer $C_1$-$C_{12}$-Monocarbonsäuren, umfassen.

4. Verwendung gemäß Anspruch 3, wobei die Monomere zusätzlich zu den Monomeren M2, M3 und Itaconsäure 0,1 bis 4,8 Gew.-% hydrophile Monomere M4, bezogen auf das Gesamtgewicht der Monomere M, umfassen.

5. Verwendung gemäß einem der vorhergehenden Ansprüche, wobei die wässrige Zubereitung, bezogen auf ihr Gesamtgewicht,

- 10 bis 60 Gew.-% wenigstens eines Copolymers P und
- 0,1 bis 30 Gew.-% übliche Hilfsmittel

enthält.

6. Verwendung gemäß Anspruch 5, wobei die wässrige Zubereitung, bezogen auf ihr Gesamtgewicht, zusätzlich noch

- 10 bis 60 Gew.-% Pigmente und/oder Füllstoffe enthält.

7. Verwendung gemäß einem der vorhergehenden Ansprüche zur Konservierung der Oberflächen eines Betonsteins oder einer Faserzementplatte.

8. Verfahren zur Herstellung beschichteter Betonsteine und Faserzementplatten, **dadurch gekennzeichnet, dass** man eine Zubereitung, wie in einem der Ansprüche 1 bis 6 definiert, auf wenigstens eine der Oberflächen der Betonsteine oder der Faserzementplatten aufträgt und anschließend trocknet.

9. Verfahren nach Anspruch 8, **dadurch gekennzeichnet, dass** man auf den gegebenenfalls getrockneten Auftrag der Zubereitung gemäß einem der Ansprüche 1 bis 6 eine strahlungshärtbare Zubereitung, die wenigstens ein organisches Oligomer oder Polymer, das wenigstens zwei Acrylat- und/oder Methacrylatgruppen pro Molekül enthält, aufbringt und anschließend durch Bestrahlung mit UV- oder Elektronenstrahlung härtet.

## Claims

1. The use of aqueous formulations comprising as film-forming constituent at least one copolymer P, synthesized from ethylenically unsaturated monomers M, for coating concrete blocks and fiber cement slabs, the copolymer P having a glass transition temperature Tg in the range from -25 to +80°C and the monomers M comprising exclusively

   - itaconic acid as monomer M1 in an amount of more than 0.2% by weight and up to 5.0% by weight, based on the overall weight of the monomers M,
   - at least one further comonomer selected from vinylaromatic monomers, the esters of ethylenically unsaturated $C_3$-$C_8$ monocarboxylic acids with $C_1$-$C_{18}$ alkanols and the vinyl esters of aliphatic $C_1$-$C_{18}$ monocarboxylic acids, and
   - if desired, one or more hydrophilic monomers M4 selected from the amides of monoethylenically unsaturated $C_3$-$C_8$ monocarboxylic acids, the overall amount of the monomers M4 and itaconic acid being ≤ 5% by weight, based on the overall monomer amount,

   the aqueous formulation further comprising at least one surface-active substance of the formula I

   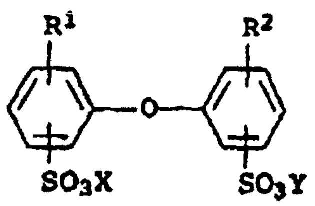

   (I)

   in which
   $R^1$ and $R^2$ are hydrogen or $C_4$-$C_{24}$ alkyl but are not simultaneously hydrogen and
   X and Y are alkali metal ions and/or ammonium ions.

2. The use as claimed in claim 1, wherein the monomers M comprise more than 0.5% by weight and less than 3% by weight, based on their overall weight, of itaconic acid as monomer M1.

3. The use as claimed in any of the preceding claims, wherein the monomers M comprise in addition to the itaconic acid at least two further monomers M2 and M3 selected from vinylaromatic monomers, from the esters of ethylenically unsaturated $C_3$-$C_8$ monocarboxylic acids with $C_1$-$C_{12}$ alkanols and from the vinyl esters of aliphatic $C_1$-$C_{12}$ monocarboxylic acids.

4. The use as claimed in claim 3, wherein the monomers comprise in addition to the monomers M2, M3 and itaconic acid from 0.1 to 4.8% by weight of hydrophilic monomers M4, based on the overall weight of the monomers M.

5. The use as claimed in any of the preceding claims, wherein the aqueous formulation comprises, based on its overall weight,

   - from 10 to 60% by weight of at least one copolymer P, and
   - from 0.1 to 30% by weight of customary auxiliaries.

6. The use as claimed in claim 5, wherein the aqueous formulation additionally comprises, based on its overall weight,

   - from 10 to 60% by weight of pigments and/or fillers.

7. The use as claimed in any of the preceding claims for preserving the surfaces of a concrete block or fiber cement slab.

8. A method of producing coated concrete blocks and fiber cement slabs which comprises applying a formulation as defined in any of claims 1 to 6 to at least one of the surfaces of the concrete blocks or fiber cement slabs and then drying it.

9. A method as claimed in claim 8, wherein a radiation-curable formulation comprising at least one organic oligomer or polymer that contains at least two acrylate and/or methacrylate groups per molecule is applied to the dried or undried coat of the formulation as set forth in any of claims 1 to 6 and is then cured by irradiation with UV or electron beams.

## Revendications

1. Utilisation de compositions aqueuses, qui contiennent au moins un copolymère P, élaboré à partir de monomères éthyléniquement insaturés M, comme constituant filmogène, pour le revêtement de bétons et de plaques en fibrociment, où le copolymère P présente une température de transition vitreuse $T_v$ située dans l'intervalle allant de -25 à +80°C et où les monomères M comprennent exclusivement :

- l'acide itaconique comme monomère M1 en une quantité de plus de 0,2% en poids et jusqu'à 5,0% en poids, sur base du poids total des monomères M ;
- au moins un autre comonomère, qui est choisi parmi les monomères vinylaromatiques, les esters d'acides monocarboxyliques en $C_3$-$C_8$ éthyléniquement insaturés avec des alcanols en $C_1$-$C_{18}$ et les esters vinyliques d'acides monocarboxyliques en $C_1$-$C_{18}$ aliphatiques, et
- le cas échéant, un ou plusieurs monomères hydrophiles M4, choisis parmi les amides d'acides monocarboxyliques en $C_3$-$C_8$ monoéthyléniquement insaturés,

où la quantité totale de monomère M4 et d'acide itaconique est ≤ 5% en poids, sur base de la quantité totale de monomère,
où la composition aqueuse comprend en outre, au moins une substance tensioactive de la formule I :

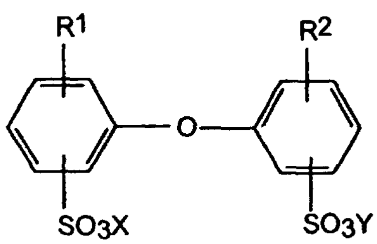

(I)

où
$R^1$ et $R^2$ représentent hydrogène ou alkyle en $C_4$-$C_{24}$, où ils ne représentent pas simultanément hydrogène, et
X et Y représentent un ion de métal alcalin et/ou un ion ammonium.

2. Utilisation selon la revendication 1, où les monomères M comprennent plus de 0,5% en poids et moins de 3% en poids, sur base de leur poids total, d'acide itaconique comme monomère M1.

3. Utilisation selon l'une quelconque des revendications précédentes, où les monomères M comprennent en plus de l'acide itaconique, au moins deux autres monomères M2 et M3, choisis parmi les monomères vinylaromatiques, les esters d'acides monocarboxyliques en $C_3$-$C_8$ éthyléniquement insaturés avec des alcanols en $C_1$-$C_{12}$ et les esters vinyliques d'acides monocarboxyliques en $C_1$-$C_{12}$ aliphatiques.

4. Utilisation selon la revendication 3, où les monomères comprennent en plus des monomères M2, M3 et de l'acide itaconique, 0,1 à 4,8% en poids de monomères hydrophiles M4, sur base du poids total des monomères M.

5. Utilisation selon l'une quelconque des revendications précédentes, où la composition aqueuse contient, sur base de son poids total :

- 10 à 60% en poids d'au moins un copolymère P, et
- 0,1 à 30% en poids d'auxiliaires usuels.

**6.** Utilisation selon la revendication 5, où la composition aqueuse contient, sur base de son poids total, encore :

- 10 à 60% en poids de pigments et/ou charges.

**7.** Utilisation selon l'une quelconque des revendications précédentes, pour la conservation des surfaces d'un béton ou d'une plaque en fibrociment.

**8.** Procédé de préparation de bétons et plaques en fibrociment revêtus, **caractérisé en ce que** l'on applique une composition telle que définie dans l'une quelconque des revendications 1 à 6, sur au moins l'une des surfaces du béton ou de la plaque en fibrociment, et ensuite on sèche.

**9.** Procédé selon la revendication 8, **caractérisé en ce que** l'on applique sur la couche le cas échéant séchée de la composition selon l'une quelconque des revendications 1 à 6, une composition durcissable par irradiation, qui contient au moins un oligomère ou polymère organique, qui contient au moins deux radicaux acrylate et/ou méthacrylate par molécule, et ensuite on durcit par irradiation avec un rayonnement U.V. ou électronique.